# FASCICULE DE BREVET EUROPEEN

(11) **EP 3 434 427 B1**
(45) Date de publication et mention de la délivrance du brevet: **26.02.2020**
(21) Numéro de dépôt: 18181595.2
(22) Date de dépôt: 04.07.2018
(51) Int. Cl.: B25J 13/08, B25J 19/02, B25J 19/06

(54) **ROBOT MUNI DE MOYENS DE DÉTECTION CAPACITIFS ET DE PAROIS RÉFÉRENCÉES À UN POTENTIEL DE GARDE**
ROBOTER, DER MIT KAPAZITIVEN DETEKTIONSMITTELN UND AUF EIN SCHUTZPOTENZIAL EINGESTELLTEN WÄNDEN AUSGESTATTET IST
ROBOT WITH CAPACITIVE DETECTION MEANS AND REFERENCED WALLS WITH A GUARD POTENTIAL

(30) Priorité: 26.07.2017 WO PCT/FR2017/052086
(43) Date de publication de la demande: 30.01.2019
(73) Titulaire: Fogale Nanotech, 30900 Nimes (FR)
(72) Inventeur: ROZIERE, Didier, 30900 Nîmes (FR); OSSART, Frédéric, 30980 Langlade (FR)
(74) Mandataire: IPAZ

(56) Documents cités:
- WO-A1-2014/101943
- US-A- 5 166 679
- US-A- 5 363 051

## Description

### Domaine technique

La présente invention concerne un robot équipé de moyens de détection capacitifs et de parois, ou de coques, électriquement référencées, partiellement ou totalement, à un potentiel de garde différent d'un potentiel de masse générale.

Le domaine de l'invention est, de manière non limitative, celui du domaine de la robotique, en particulier le domaine de la robotique industrielle ou des robots de service, par exemple médical ou domestique, ou encore des robots collaboratifs, également appelés « cobots ».

### Etat de la technique

Les robots industriels ou domestiques, en particulier les cobots, comprennent généralement un corps sur lequel est fixée une tête fonctionnelle, se présentant sous la forme d'un outil ou d'un porte-outil, leur permettant d'accomplir une ou plusieurs tâches dans un environnement.

Ces robots interviennent dans de plus en plus d'applications, soit de manière complétement autonome, soit en assistance à une personne ou à un opérateur. Ils sont généralement équipés de capteurs leur permettant de détecter les objets et personnes se trouvant dans leur environnement, en vue d'assurer la sécurité du robot, mais aussi des objets et personnes environnants. Ces capteurs peuvent être réalisés par des électrodes de détection capacitives, voir par exemple les documents US5166679 et US5363051.

Cependant, les inventeurs ont constaté que dans certaines situations, les électrodes capacitives équipant la paroi externe du robot, détectent les parties composant le robot lui-même, en particulier lorsque le robot est un bras robotisé comprenant plusieurs segments articulés. Une telle détection, appelée « auto-détection » dans la suite, limite l'amplitude de fonctionnement du robot. En effet, cette auto-détection peut masquer la présence d'un objet ou d'une personne approchant le robot et empêcher sa détection, ce qui est inacceptable du point de vue de la sécurité. Il s'ensuit que dans certains cas, le robot peut se mettre dans un mode de fonctionnement dégradé, ou se bloquer inutilement par soucis de sécurité.

Un but de la présente invention est de pallier à cet inconvénient.

Un autre but de la présente invention est de proposer un robot équipé d'une fonctionnalité de détection plus efficace.

Un autre but de la présente invention est de proposer un robot équipé d'une fonctionnalité de détection évitant les auto-détections.

Un autre but de la présente invention est de proposer un robot équipé d'une fonctionnalité de détection ne limitant pas l'amplitude de fonctionnement du robot et ne pénalisant le fonctionnement du robot.

### Exposé de l'invention

Au moins un de ces buts est atteint avec un robot comprenant au moins une sous-partie, ledit robot comprenant en outre :
- pour au moins une sous-partie, dite équipée, au moins une électrode de détection capacitive, dite de mesure, disposée sur, ou dans, une paroi externe de ladite sous-partie, en particulier électriquement isolée de ladite paroi externe lorsque ladite paroi externe est électriquement conductrice,
- au moins un moyen de polarisation électrique pour polariser ladite au moins une électrode de mesure à un premier potentiel électrique alternatif (V_{G}), différent d'un potentiel de masse générale, à une fréquence, dite de travail, et
- au moins une électronique, dite de détection, pour mesurer un signal relatif à une capacité de couplage, dite capacité électrode-objet, entre l'au moins une électrode de mesure et un objet environnant ;
caractérisé en ce que ledit au moins un moyen de polarisation est en outre agencé pour polariser au moins une partie électriquement conductrice de la paroi externe d'au moins une sous-partie à un potentiel électrique alternatif (V_{G}), dit de garde, identique ou sensiblement identique audit premier potentiel, à ladite fréquence de travail.

Le fait de polariser des éléments au potentiel de garde permet d'éviter l'apparition de capacités de fuite ou parasites entre les électrodes de détection capacitives et ces éléments à la garde. Ainsi la présence de ces éléments de garde permet d'optimiser la portée de la détection capacitive et de la rendre insensible à son environnement.

Ainsi, l'invention propose de mettre au potentiel de garde la paroi externe des sous-parties d'un robot, lorsque lesdites parois externes sont conductrices. La paroi externe conductrice d'une sous-partie, mise au potentiel de garde, devient électriquement invisible par les électrodes de détection capacitives équipant cette sous-partie ou une autre sous-partie, et plus généralement le robot. Par conséquent, une sous-partie dont la paroi externe est au potentiel de garde ne sera pas détectée par les électrodes de mesure comme étant un objet environnant. Le robot selon l'invention est donc équipé d'une fonctionnalité de détection plus efficace, qui ne limite pas l'amplitude de fonctionnement du robot.

Dans la présente demande, deux potentiels alternatifs sont identiques à une fréquence donnée lorsqu'ils comportent chacun une composante alternative identique ou similaire à cette fréquence. Ainsi, l'un au moins des deux potentiels identiques à ladite fréquence peut comporter en outre une composante continue, et/ou une composante alternative de fréquence différente de ladite fréquence donnée.

De manière similaire, deux potentiels alternatifs sont différents à la fréquence de travail lorsqu'ils ne comportent pas de composante alternative identique ou similaire à cette fréquence de travail.

Dans la présente demande, le terme « potentiel de masse » ou « potentiel de masse générale » désigne un potentiel de référence de l'électronique, du robot ou de son environnement, qui peut être par exemple une masse électrique ou un potentiel de masse. Ce potentiel de masse peut correspondre à un potentiel de terre, ou à un autre potentiel relié ou non au potentiel de terre.

On rappelle par ailleurs que de manière générale, les objets qui ne sont pas en contact électrique direct avec un potentiel électrique particulier (objets électriquement flottants) tendent à se polariser par couplage capacitif au potentiel électrique d'autres objets présents dans leur environnement, tel que par exemple la terre ou des électrodes, si les surfaces de recouvrement entre ces objets et ceux de l'environnement (ou les électrodes) sont suffisamment importantes.

Dans la présente demande, « objet » désigne tout objet ou personne pouvant se trouver dans l'environnement du robot.

La paroi externe d'une sous-partie peut être formée par un ou plusieurs éléments d'habillage.

La paroi externe d'une sous-partie peut être une coque, rigide ou non, de ladite sous-partie.

Dans la présente demande, une sous-partie du robot peut être l'un quelconque des éléments suivants pouvant composer un robot :
- un segment du robot, ou
- une interface mécanique, articulée ou non, entre au moins deux segments, ou
- une tête fonctionnelle, articulée ou non, formant un outil, ou une tête d'outil, généralement disposée au niveau d'une extrémité distale du robot.

La tête fonctionnelle peut comprendre, ou peut être formée par :
- un moyen de préhension d'un objet, tel qu'une pince ou un étau ;
- un moyen de traitement d'un objet, tel qu'une ponceuse, une perceuse, un pistolet de peinture, etc. ; et/ou
- un moyen d'inspection d'un objet, tel qu'une caméra, une tête d'interférométrie, etc.

Suivant un exemple de réalisation non limitatif, le robot selon l'invention peut comprendre plusieurs segments.

Au moins un segment peut être relié à un autre segment par une interface mécanique articulée.

Au moins un segment peut être relié à un autre segment par une interface mécanique qui n'est pas articulée.

Dans le robot selon l'invention, au moins une sous-partie dudit robot peut ne pas comporter d'électrode de mesure. Dans ce cas, cette sous-partie est dite « non-équipée ».

Alternativement, chaque sous partie dudit robot peut comporter au moins une électrode de mesure. Dans ce cas, chaque sous-partie est dite « équipée ».

Dans le robot selon l'invention, au moins une sous-partie peut comprendre au moins un organe électrique agencée dans ladite sous-partie, et/ou au moins un élément électriquement référencé à un potentiel de référence électrique. Dans ce cas, ladite sous-partie est dite « appareillée ».

Un tel organe électrique peut être un moteur, un capteur, ou actionneur, etc. Par exemple, lorsque la sous partie est une interface articulée, également appelée articulation, alors ladite interface peut comprendre un moteur. Lorsque la sous-partie est un segment, ledit segment peut comporter un module électronique ou un capteur. Lorsque la sous-partie est une tête fonctionnelle, ladite tête fonctionnelle peut comprendre un moteur actionneur d'un outil, un capteur, etc.

Dans un mode de réalisation, le robot selon l'invention peut comprendre au moins une sous-partie, dite non-équipée, ne comportant pas d'électrode de mesure, et dont au moins une partie électriquement conductrice de la paroi externe est polarisée au potentiel de garde.

Ainsi, même si cette sous-partie n'est pas utilisée par la fonctionnalité de détection capacitive, il ne vient pas gêner ladite fonctionnalité de détection, car il est électriquement invisible des électrodes de mesure des sous-parties équipées.

Dans un mode de réalisation, le robot selon l'invention peut comprendre, au moins une sous-partie équipée dont au moins une partie de la paroi externe est polarisée au potentiel de garde.

Ainsi, cette sous-partie participe à la fonctionnalité de détection pour détecter des objets environnants, sans être vue par les électrodes de détection capacitives équipant une autre, ou les autres, sous-partie(s).

De plus, la paroi externe mise au potentiel de garde forme avantageusement un plan de garde pour les électrodes de mesure équipant la sous-partie équipée de sorte à augmenter la portée et l'efficacité de détection des électrodes de mesure.

Suivant un mode de réalisation particulièrement avantageux, le moyen de polarisation peut avantageusement être agencé pour polariser au potentiel de garde la paroi externe de la majorité, ou de la totalité, des sous-parties.

Ainsi, la majorité ou la totalité des sous-parties devient invisible pour les électrodes de mesure.

Dans ce cas, le robot selon l'invention peut comprendre une interface de fixation dudit robot à un support externe, et un isolant électrique au niveau de ladite interface de fixation.

Ainsi, la paroi externe de la totalité du robot est électriquement isolée du support externe.

Le support externe auquel le robot peut être fixé peut par exemple être le sol, ou une surface d'un appareil ou machine.

Le robot peut ainsi comprendre une garde réalisée par au moins une partie, ou la totalité, du corps du robot selon l'invention, polarisée au potentiel de garde.

En effet, il est possible de polariser une partie importante, ou la totalité du corps du robot au potentiel de garde. Lorsque le robot est un bras robotisé, il est possible de polariser une partie importante, voire la totalité, du bras au potentiel de garde et de l'utiliser comme garde.

Dans ce cas, un circuit électronique convertisseur, dit circuit d'interface, est interfacé entre le circuit électrique de cette partie polarisée à la garde du robot, et le circuit électrique du reste du robot référencé à la masse générale. Ce circuit d'interface génère l'excitation de l'électronique capacitive référencée à la garde, et assure l'interface entre l'électronique de la partie polarisée à la garde du robot, et l'électronique référencée à la masse (alimentation, communication, etc.) du reste du robot. Ce circuit d'interface peut être logé au niveau de la partie référencée à la garde du robot, ou au niveau de la partie référencée au potentiel de masse du robot.

Lorsqu'une partie, ou l'ensemble du robot, est recouvert(e) d'électrodes capacitives, et que la partie du robot supportant ces électrodes est référencée au potentiel de la garde, la structure du robot au niveau de cette partie peut en être simplifiée car il n'est pas nécessaire d'intercaler une garde supplémentaire entre le robot et ces électrodes capacitives. Ces électrodes et la tête fonctionnelle peuvent alors être référencées au même potentiel de garde, ce qui évite toute interférence.

Dans un mode de réalisation, le robot selon l'invention peut comprendre au moins une sous-partie équipée dont la paroi externe n'est pas polarisée au potentiel de garde.

Lorsqu'une telle sous-partie comporte des électrodes de mesure, il est nécessaire d'insérer un plan de garde entre la paroi externe et ces électrodes, pour les protéger des couplages parasites. Dans ce cas, du fait de la présence de ce plan de garde et des électrodes, ladite sous-partie n'est pas visible des électrodes mesure équipant les autres sous-parties. Dans ce cas, il peut être envisageable de ne pas mettre, au potentiel de garde, la paroi externe d'une sous-partie équipée d'électrodes de mesure.

La polarisation au potentiel de garde des parois externes d'au moins deux sous-parties peut être réalisée par des lignes ou des liaisons électriques indépendantes et dédiées à chacune desdites sous-parties.

Alternativement, la polarisation au potentiel de garde des parois externes d'au moins deux sous-parties peut être réalisée par une ligne électrique commune et une connexion électrique entre lesdites sous-parties. Dans ce cas, la paroi externe d'une des sous-parties est mise au potentiel de garde par la ligne électrique commune. Le potentiel de garde se propage à la paroi de l'autre sous-partie par l'intermédiaire de ladite connexion électrique.

Comme expliqué précédemment, le robot selon l'invention peut comprendre au moins une sous-partie, dite appareillée, comprenant au moins un organe électrique disposé dans ladite sous-partie.

Bien entendu, le robot selon l'invention peut comprendre au moins une sous-partie dont la paroi externe peut être au moins en partie non-conductrice. Une telle sous-partie peut être un segment du robot, une interface mécanique se trouvant entre deux segments, ou encore une tête fonctionnelle.

Lorsqu'une telle sous-partie ne comporte pas d'organe électrique, c'est-à-dire que la sous-partie est dite « non-appareillée », cela n'est pas gênant pour la fonctionnalité de détection.

Cependant, lorsque la sous-partie est appareillée, c'est-à-dire qu'elle comporte au moins un organe électrique et/ou au moins un élément électriquement référencé à un potentiel de référence électrique, alors ce dernier peut gêner la fonctionnalité de détection capacitive.

Ainsi, suivant des modes de réalisation, une sous-partie appareillée peut en outre comprendre, pour au moins un organe électrique, un volume, ou des parois, de garde, disposé(es) autour dudit au moins un organe électrique et polarisé au potentiel de grade.

Un tel volume de garde polarisée au potentiel de garde permet de rendre la ou les organes de la sous-partie invisible pour la fonctionnalité de détection capacitive.

Suivant d'autres modes de réalisation, une sous-partie appareillée peut comporter au moins un organe électriquement polarisé, ou référencé, au potentiel de garde.

Ces modes de réalisation sont particulièrement utiles lorsque ladite sous-partie appareillée comportant une paroi externe, au moins en partie, électriquement non-conductrice.

Le robot selon l'invention peut en outre comprendre, pour au moins un organe électrique de ladite sous-partie appareillée, au moins un convertisseur électrique agencé pour :
- recevoir au moins un signal électrique, dit d'entrée, tel qu'un signal d'alimentation ou de commande, destiné audit au moins un organe électrique, et référencer ledit signal d'entrée au potentiel de garde ; et/ou
- recevoir au moins un signal électrique, dit de sortie, émis par ledit au moins un organe électrique, et référencer ledit signal de sortie au potentiel de masse électrique d'un contrôleur auquel il est destiné.

Ainsi, l'organe électrique se trouvant dans la sous-partie appareillée est globalement référencé au potentiel de garde et ne perturbe donc pas la détection capacitive.

Ce mode de réalisation présente l'avantage d'être moins encombrant, moins couteux et plus facile à mettre en place, comparé à celui utilisant un volume de garde.

Le convertisseur peut être agencé pour recevoir les signaux d'entrée référencés au potentiel de masse général et les transformer en sortie en signaux référencés au potentiel de garde, et *vice versa.*

Dans une version particulièrement avantageuse, le robot selon l'invention peut comprendre une tête fonctionnelle formée par une sous-partie distale.

Une telle tête fonctionnelle se trouve généralement à une extrémité libre du robot.

Tel que précisé plus haut, la tête fonctionnelle peut comprendre, ou être formée par :
- un moyen de préhension d'un objet, tel qu'une pince ou un étau ;
- un moyen de traitement d'un objet, tel qu'une ponceuse, une perceuse, un pistolet de peinture, etc. ; et/ou
- un moyen d'inspection d'un objet, tel qu'une caméra, une tête d'interférométrie, etc.

Avantageusement, la tête fonctionnelle étant formée par, ou formée par, une sous-partie, peut présenter chacune des caractéristiques décrites plus haut pour une sous-partie.

Elle peut comporter, ou non, au moins une électrode de mesure, en particulier isolée d'une paroi externe de ladite tête fonctionnelle lorsque ladite paroi externe est conductrice.

Elle peut comporter, ou non, au moins un organe électrique disposée dans la tête fonctionnelle.

Suivant une version du robot selon l'invention, la paroi externe de la tête fonctionnelle peut être mise au potentiel de garde, lorsqu'elle est conductrice.

Plus généralement, la tête fonctionnelle peut entièrement être mise au potentiel de garde.

Suivant une version du robot selon l'invention, la tête fonctionnelle ne forme pas une électrode de détection capacitive. Autrement dit, la tête fonctionnelle n'est pas utilisée comme une électrode de détection capacitive pour détecter la présence ou non d'un objet environnant.

Suivant une autre version, la tête fonctionnelle peut avantageusement être utilisée comme, ou former, une électrode de détection capacitive. Pour ce faire, ladite tête fonctionnelle peut être isolée du reste du robot. L'au moins un moyen de polarisation peut en outre être agencé pour polariser ladite tête fonctionnelle au premier potentiel électrique alternatif, et l'au moins une électronique de détection peut être agencée pour mesurer un signal relatif à une capacité de couplage entre ladite tête fonctionnelle et un objet environnant.

Dans cette version, le robot selon l'invention peut éventuellement comprendre :
- au moins un isolant électrique pour isoler électriquement ladite tête fonctionnelle du reste dudit robot, et/ou
- au moins une garde, polarisée au potentiel de garde, et disposée entre ladite tête fonctionnelle et le reste dudit robot ;
lorsque la sous-partie sur/dans laquelle la tête fonctionnelle est fixée comporte une paroi externe conductrice.

Dans cette version, la tête fonctionnelle est utilisée comme électrode capacitive pour réaliser une détection capacitive d'approche ou de contact avec un objet ou une personne environnante. La capacité de couplage générée par la tête fonctionnelle, et en particulier par l'outil ou le porte-outil, du robot selon l'invention, et mesurée par l'électronique de détection, correspond à la capacité créée entre l'environnement et la tête fonctionnelle.

Cette version présente l'avantage de doter la tête d'un robot d'une fonction de détection capacitive d'approche et de contact, sans devoir équiper ladite tête fonctionnelle d'électrodes capacitives. Une telle solution est simple, peu coûteuse, peu chronophage et robuste. De plus, une telle solution peut être appliquée, avec peu de modifications, à un robot existant qui n'a pas été initialement conçu avec une telle fonction de détection.

En outre, lorsque le robot est prévu pour utiliser des têtes fonctionnelles interchangeables, la solution proposée permet d'intervenir sur lesdites têtes fonctionnelles de manière indépendante, sans intervenir sur le reste du robot.

Par ailleurs, un autre avantage de cette version est la possibilité d'utiliser un objet embarqué par la tête fonctionnelle, comme le prolongement de la tête fonctionnelle utilisée comme électrode. En effet, le contact intime entre la tête fonctionnelle et l'objet transporté crée un important couplage capacitif entre eux. La tête fonctionnelle et l'objet qu'elle transporte se retrouvent naturellement à un potentiel électrique similaire. L'objet transporté n'a pas besoin d'être un bon conducteur d'électricité pour se comporter comme le prolongement de la tête fonctionnelle sur le plan de la détection capacitive. Un diélectrique d'un matériau plastique ou polymère dont la permittivité diélectrique est par exemple supérieure à 3 suffit pour devenir le prolongement de la tête fonctionnelle. L'objet transporté fait alors partie de la tête fonctionnelle sensible.

La tête fonctionnelle peut comprendre plusieurs parties sensibles distinctes utilisées comme électrodes capacitives distinctes, et interrogées séquentiellement ou en parallèle par l'électronique de détection. Dans la mesure où ces parties sensibles sont polarisées au même premier potentiel électrique alternatif, elles constituent respectivement des éléments de garde pour les autres et ne se perturbent donc pas. Ces parties sensibles distinctes peuvent être par exemple les doigts d'un outil de préhension.

De plus, le robot selon l'invention peut comprendre au moins un organe électrique disposé dans la tête fonctionnelle, tel qu'un capteur, un actuateur, un moteur, et/ou une électronique associée (conditionneur, driver). Dans ce cas, la tête fonctionnelle est dite appareillée.

Un tel organe électrique peut comprendre, ou être associé à, des fils électriques qui transportent des signaux d'entrée/sortie vers/depuis ledit organe électrique.

Par exemple, la tête fonctionnelle peut utiliser, ou être équipée de, une pince. Celle-ci est généralement gérée par le robot via deux fils d'alimentation pour la puissance et deux fils de communication série pour les commandes et les retours d'information.

Or, par défaut, ces organes électriques sont référencés au potentiel de masse générale, et risquent donc d'être détectés par la partie sensible de la tête fonctionnelle utilisée comme électrode capacitive.

Suivant un mode de réalisation, dans le cas où la tête fonctionnelle est utilisée comme électrode de détection capacitive, pour au moins un organe électrique disposé dans la tête fonctionnelle, ladite tête fonctionnelle peut comprendre un volume, ou des parois, de garde, disposé(es) autour dudit au moins un organe électrique, et polarisé(es) au potentiel de garde, à la fréquence de travail.

Suivant un autre mode de réalisation, dans le cas où la tête fonctionnelle est utilisée comme électrode de détection capacitive, elle peut comprendre au moins un organe électrique agencé dans ladite tête fonctionnelle, électriquement polarisé ou référencé au potentiel de garde.

Dans ce cas, le robot selon l'invention peut comprendre en outre au moins un convertisseur électrique agencé pour :
- recevoir au moins un signal électrique, dit d'entrée, tel qu'un signal d'alimentation ou de commande, destiné audit au moins un organe électrique, et référencer ledit signal d'entrée au potentiel de garde (VG) ; et/ou
- recevoir au moins un signal électrique, dit de sortie, émis par ledit au moins un organe électrique, et référencer ledit signal de sortie au potentiel de masse électrique d'un contrôleur auquel il est destiné.

Ainsi, l'organe électrique se trouvant dans la tête fonctionnelle est globalement référencé au potentiel de garde et ne perturbe donc pas la détection capacitive.

Ce mode de réalisation présente l'avantage d'être moins encombrant, moins couteux et plus facile à mettre en place.

Le convertisseur peut être agencé pour recevoir les signaux d'entrée référencés au potentiel de masse général et les transformer en sortie en signaux référencés au potentiel de garde, et *vice versa.*

Le convertisseur peut être dédié à la tête fonctionnelle.

Alternativement, le convertisseur peut être commun à au moins une autre sous-partie appareillée pour laquelle une fonctionnalité de conversation de potentiel de référence, tel que décrit plus haut, est souhaitée ou nécessaire.

Suivant des exemples de réalisation, un tel convertisseur, pour une sous-partie et/ou une tête fonctionnelle, peut comprendre au moins l'un des éléments suivants :
- au moins une alimentation à isolation galvanique, telle qu'un convertisseur DC/DC, en particulier pour générer un signal d'entrée d'alimentation pour ledit au moins un organe électrique ;
- au moins une interface électrique sans contact galvanique, de type capacitive ou par opto-coupleur, pour au moins un signal d'entrée de commande, ou au moins un signal de sortie ;
- une ou plusieurs inductances à impédance élevée pour recevoir et transmettre au moins un signal d'entrée ou au moins un signal de sortie ;
- au moins un convertisseur à transfert de charges, ou à pompe de charge, à base de capacités commutées ; et/ou
- des dispositifs à diode.

Suivant un mode de réalisation, tous les organes électriques agencés dans le robot selon l'invention peuvent être électriquement référencés au potentiel de garde (V_{G}), au travers d'un unique, ou de plusieurs, convertisseur(s).

Il est à noter que dans la mesure où la détection du couplage capacitif est réalisée à une fréquence de travail, les signaux électriques d'entrée/sortie concernant les organes électriques du robot ne perturbent pas la mesure de la capacité de couplage car ils sont rejetés ou filtrés par l'électronique de détection capacitive. Cela est d'autant plus efficace, dans le cas d'une démodulation synchrone du signal mesurée par l'électronique de détection.

Suivant un exemple de réalisation, pour au moins un, en particulier chaque, sous-partie la paroi externe de ladite sous-partie peut être réalisée, au moins en partie, en un matériau électriquement conducteur, tel que par exemple en un métal conducteur.

Suivant un exemple de réalisation alternatif, la paroi externe d'au moins une, en particulier de chaque, sous-partie peut être réalisée en un matériau de base électriquement non-conducteur comportant une couche électriquement conductrice. La couche électriquement conductrice peut être déposée sur la surface extérieure du matériau de base, ou dans l'épaisseur du matériau de base.

Le matériau de base peut par exemple être du plastique, du bois, etc.

Le moyen de polarisation électrique peut avantageusement comprendre un oscillateur qui génère une tension alternative d'excitation utilisée comme premier potentiel électrique alternatif.

Cette tension alternative d'excitation peut être également utilisée comme potentiel de garde (V_{G}).

Le robot selon l'invention peut comprendre un moyen de polarisation unique.

Alternativement, le robot selon l'invention peut comprendre un moyen de polarisation dédié à un segment, une articulation ou à la tête fonctionnelle.

L'électronique de détection peut avantageusement comprendre un circuit comprenant un amplificateur de courant ou de charge. Un tel amplificateur peut être réalisé par un amplificateur opérationnel et une capacité de contre-réaction.

Suivant des modes de mise en œuvre préférentiels, l'électronique de détection, et en particulier l'amplificateur opérationnel, peuvent être alimentés à un potentiel référencé au potentiel de garde.

Suivant d'autres modes de mise en œuvre, l'électronique de détection peut être alimentée à un potentiel référencé au potentiel de masse générale.

L'électronique de détection peut en outre comprendre un conditionneur ou des moyens de conditionnement permettant d'obtenir un signal représentatif de la capacité électrode-objet recherchée, et/ou de la présence ou de la proximité d'un objet.

Ce conditionneur peut comprendre par exemple un démodulateur synchrone pour démoduler le signal par rapport à une porteuse, à une fréquence de travail.

Le conditionneur peut également comprendre un démodulateur asynchrone ou un détecteur d'amplitude.

Ce conditionneur peut bien entendu être réalisé sous une forme analogique et/ou numérique (microprocesseur) et comprendre tous moyens nécessaires de filtrage, conversion, traitement, etc.

Les signaux de mesure capacitive, en particulier les signaux issus du conditionneur le cas échéant, peuvent ensuite être traités par un logiciel ou un module de gestion, qui permet de gérer la détection d'approche et de toucher, et en particulier d'exploiter ces informations en fonction du contexte d'utilisation du robot.

Un tel logiciel, ou module de calcul, peut par exemple être intégré à un calculateur ou contrôleur, du robot.

A titre d'exemple, le robot selon l'invention peut facilement détecter une main humaine à plus de 10 cm de distance.

Le robot selon l'invention peut comprendre une électronique de détection unique.

Alternativement, le robot selon l'invention peut comprendre une électronique de détection dédiée à une sous-partie, telle qu'un segment, une articulation ou à la tête fonctionnelle.

L'électronique de détection et/ou le moyen de polarisation, peu(ven)t être disposé(s) en partie, ou en totalité, dans le corps du robot.

Alternativement, l'électronique de détection et/ou le moyen de polarisation, peu(ven)t être disposé(s) hors du robot et relié(s) audit robot par une ou des liaisons électriques.

Suivant des exemples de réalisation nullement limitatifs, le robot selon l'invention peut être, ou comprendre, tout système robotisé. Il peut en particulier se présenter sous la forme de, ou comprendre, un bras robotisé.

Le robot peut également être ou comprendre par exemple un robot mobile, un véhicule sur roues tel qu'un chariot muni d'un bras ou d'un système manipulateur, ou un robot de type humanoïde ou androïde, éventuellement pourvu d'organes de déplacement tels que des membres.

### Description des figures et modes de réalisation

D'autres avantages et caractéristiques apparaîtront à l'examen de la description détaillée d'exemples nullement limitatifs, et des dessins annexés sur lesquels :
- la FIGURE 1 est une représentation schématique d'un exemple de robot d'art antérieur équipé d'électrodes de détection capacitives ;
- les FIGURES 2-5 sont des représentations schématiques de différents exemples de réalisation d'un robot selon l'invention ;
- les FIGURES 6-11 sont des représentations schématiques partielles de différents exemples d'une tête fonctionnelle pouvant équiper un robot selon l'invention ;
- la FIGURE 12 est une représentation schématique d'un exemple de réalisation d'une électronique de détection pouvant être mise en oeuvre dans un robot selon l'invention ;
- la FIGURE 13 est une représentation schématique d'une articulation pouvant être mise en œuvre dans un robot selon l'invention ; et
- la FIGURE 14 est une représentation schématique d'un segment pouvant être mis en œuvre dans un robot selon l'invention.

Il est bien entendu que les modes de réalisation qui seront décrits dans la suite ne sont nullement limitatifs. On pourra notamment imaginer des variantes de l'invention ne comprenant qu'une sélection de caractéristiques décrites par la suite isolées des autres caractéristiques décrites, si cette sélection de caractéristiques est suffisante pour conférer un avantage technique ou pour différencier l'invention par rapport à l'état de la technique antérieur. Cette sélection comprend au moins une caractéristique de préférence fonctionnelle sans détails structurels, ou avec seulement une partie des détails structurels si cette partie uniquement est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

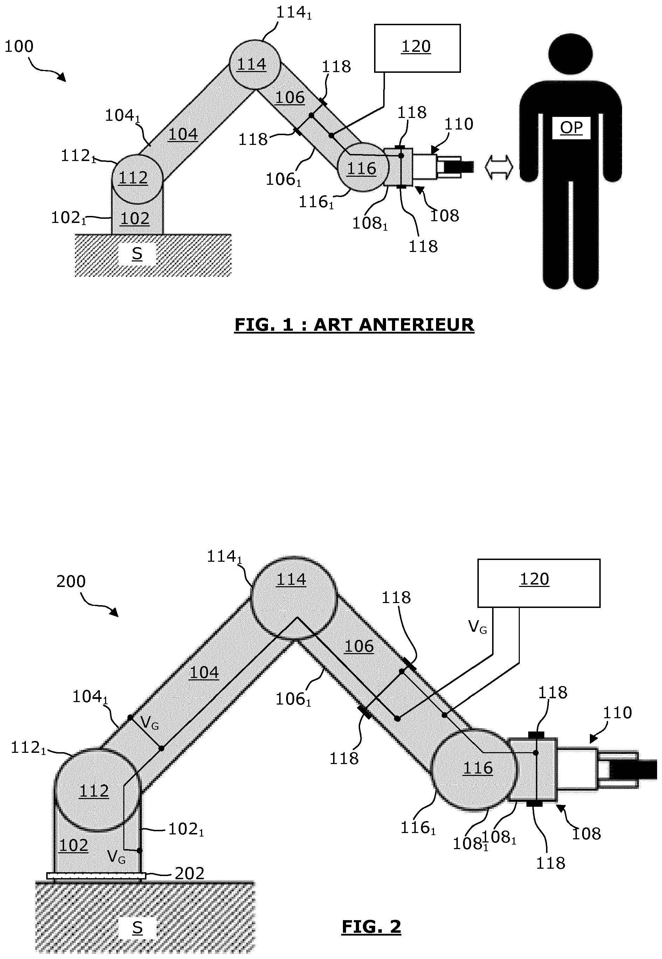

La FIGURE 1 est une représentation schématique d'un exemple de réalisation d'un robot selon l'art antérieur, équipé d'électrodes capacitives.

Le bras robotisé 100 peut être, par exemple, un robot collaboratif industriel travaillant sous la surveillance, ou en collaboration avec, un opérateur OP, ou encore un robot médical en vue d'une intervention sur le corps d'une personne, ou encore un robot d'assistance à la personne.

Le robot 100, représenté sur la FIGURE 1, se présente sous la forme d'un bras robotisé articulé comprenant huit sous-parties 102-116, à savoir :
- quatre segments 102, 104, 106 et 108 ;
- une tête fonctionnelle 110 ; et
- trois interfaces mécaniques 112, 114 et 116.

Le segment 102 est le segment de base fixé à un support S, qui peut être le sol. Le segment 108 est le segment se trouvant du côté d'une extrémité libre du robot 100. Chaque segment 102-108 est délimité par une paroi externe, respectivement 102₁-108₁, réalisée par la surface d'un élément de la structure du segment, ou par un ou plusieurs éléments de couverture, par exemple en matière plastique (polymère) ou métallique(s). Généralement, chaque segment 102-108 est creux et permet de disposer dans ledit segment des organes électriques ou électroniques.

La tête fonctionnelle 110 se trouve du côté du segment 108, et forme un outil ou un porte-outil, qui dans l'exemple représenté est une pince.

Les segments 102-108 sont articulés grâce aux interfaces mécaniques articulées 112-116, également appelées « articulations » dans la suite. L'articulation 112 se trouve entre les segments 102 et 104, l'articulation 114 se trouve entre les segments 104 et 106, et l'articulation 116 se trouve entre les segments 106 et 108. Chaque articulation 112-116 comporte une paroi ou paroi externe, respectivement 112₁-116₁, réalisée en un ou plusieurs éléments de couverture, par exemple en matière plastique (polymère) ou métallique(s).

Chacune des articulations 112-116 est une articulation rotative selon un axe. Alternativement, au moins une articulation 112-116 peut, en plus ou à la place, être une articulation de translation, et/ou une articulation en rotation avec plusieurs axes.

Les segments articulés 106 et 108 sont équipés d'une ou plusieurs électrodes de détection capacitives 118, dites électrodes de mesure. Chaque électrode de mesure 118 équipant le segment 106, respectivement le segment 108, est électriquement isolée de la paroi externe 106₁, respectivement 108₁, de ce segment.

Un module électronique 120 est associé au robot 100. Ce module électronique 120 comprend :
- une électronique de polarisation polarisant chaque électrode de mesure 118 à un premier potentiel alternatif, différent d'un potentiel de masse générale (MG), à une fréquence de travail non nulle ; et
- une électronique de mesure pour mesurer un signal électrique, et en particulier un courant électrique, pour chacune des électrodes de mesure 118 en vue d'en déduire une capacité, dite électrode-objet, résultant d'un couplage capacitif entre l'électrode de mesure et un objet dans son voisinage électriquement polarisé à la masse générale (MG) ou au moins à un potentiel différent du premier potentiel alternatif, et représentative d'une distance entre ladite électrode de mesure 118 et un objet environnant.

Chaque électrode de mesure 118 est en outre de préférence gardée par une électrode, dite de garde, (non représentée) polarisée à un potentiel alternatif de garde, notée V_{G}, identique ou sensiblement identique au premier potentiel, à la fréquence de travail et disposée entre la paroi du segment et l'électrode de mesure 118.

Ainsi, le robot 100 peut détecter un objet se trouvant dans son environnement grâce aux électrodes de mesure 118.

Cependant, dans certaines configurations, les électrodes de mesure 118 détectent également les segments 102-108 eux-mêmes ou la tête fonctionnelle 110. Par exemple, lorsque l'un des segments équipés 106 ou 108, s'approche du segment 102 ou du segment 104 ou encore de la tête fonctionnelle 110, alors les électrodes de mesure 118 équipant ce segment le détectent comme étant un objet environnant, alors que ce n'est pas le cas. Les électrodes de mesure 118 de l'un des segments équipés 106-108 peuvent aussi détecter l'autre des segments équipés 106-108 comme étant un objet environnant, par exemple lorsque l'autre segment est équipé d'un petit nombre d'électrodes de mesure 108.

Ces auto-détections diminuent l'amplitude de fonctionnement du robot 100 et pénalisent son fonctionnement.

L'invention permet de répondre à cet inconvénient.

La FIGURE 2 est une représentation schématique d'un exemple de réalisation non limitatif d'un robot selon l'invention.

Le robot 200, représenté sur la FIGURE 2, comprend tous les éléments du robot 100 de la FIGURE 1.

En plus de ce qui est décrit dans le robot 100 de la FIGURE 1, dans le robot 200 de la FIGURE 2, le segment de base 102 est électriquement isolé du support S par un joint isolant 202.

De plus, les parois externes 102₁ et 104₁ des segments 102 et 104 sont en matériau électriquement conducteur et polarisées à un potentiel de garde, notée V_{G}, identique ou sensiblement identique au premier potentiel à la fréquence de travail.

Ainsi, les parois externes 102₁ et 104₁ des segments 102 et 104 non-équipés d'électrodes de mesure sont portées au potentiel de garde V_{G}. Ce potentiel de garde V_{G} étant identique au premier potentiel à la fréquence de travail, les segments non-équipés 102 et 104 sont électriquement invisibles des électrodes de mesure 118 équipant les segments 106 et 108 car ils ne génèrent pas de capacités de couplage avec ces électrodes. Dans cette configuration, il n'y a donc pas de risque que les électrodes de mesure 118 détectent les segments 102 et 104.

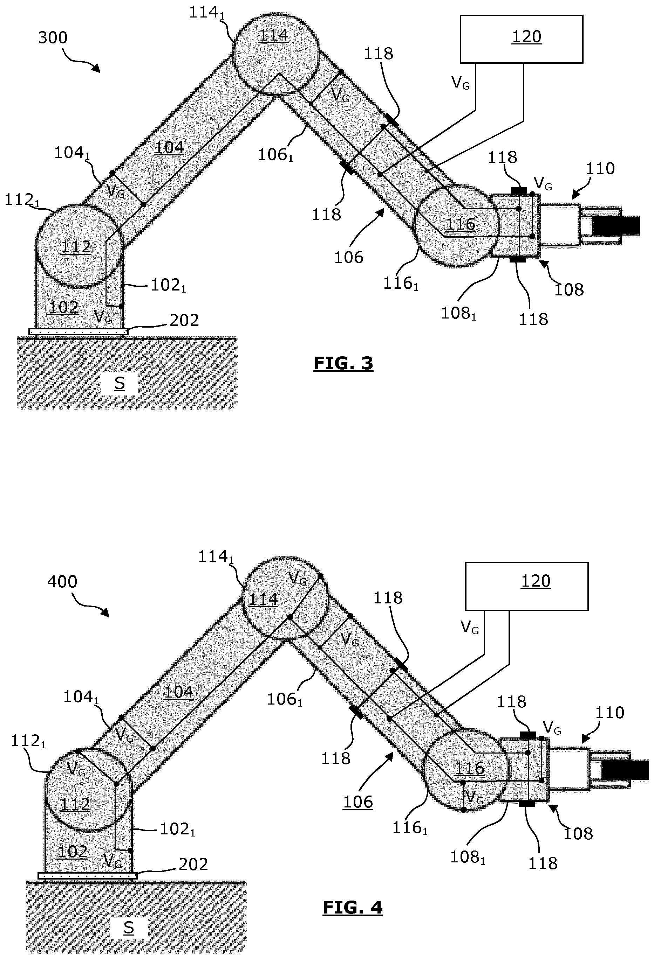

La FIGURE 3 est une représentation schématique d'un autre exemple de réalisation non limitatif d'un robot selon l'invention.

Le robot 300, représenté sur la FIGURE 3, comprend tous les éléments du robot 200 de la FIGURE 2.

En plus de ce qui est décrit dans le robot 200 de la FIGURE 2, dans le robot 300 de la FIGURE 3, les parois externes 106₁ et 108₁ des segments 106 et 108, sont aussi en matériau électriquement conducteur et polarisées au potentiel garde V_{G}.

Ainsi, à l'instar des segments non-équipés 102 et 104, les segments équipés 106 et 108 sont électriquement invisibles des électrodes de mesure 118 équipant les segments 106 et 108. Dans cette configuration, il n'y a donc pas de risque que les électrodes de mesure 118 détectent les segments 102-108. Dans cette configuration, il n'est pas nécessaire d'insérer une garde entre les électrodes de mesure 118 et la paroi des segments qui les supportent, ce qui simplifie leur agencement.

La FIGURE 4 est une représentation schématique d'un autre exemple de réalisation non limitatif d'un robot selon l'invention.

Le robot 400, représenté sur la FIGURE 4, comprend tous les éléments du robot 300 de la FIGURE 3.

En plus de ce qui est décrit dans le robot 300 de la FIGURE 3, dans le robot 400 de la FIGURE 4, les parois externes 112₁, 114₁, et 116₁ des articulations 112-116 sont aussi en matériau électriquement conducteur et polarisées au potentiel garde V_{G}.

Ainsi, à l'instar des segments 102-108, les articulations 112-116 sont aussi électriquement invisibles des électrodes de mesure 118 équipant les segments 106 et 108. Dans cette configuration, il n'y a donc pas de risque que les électrodes de mesure 118 détectent les segments 102-108, ni les articulations 112-116.

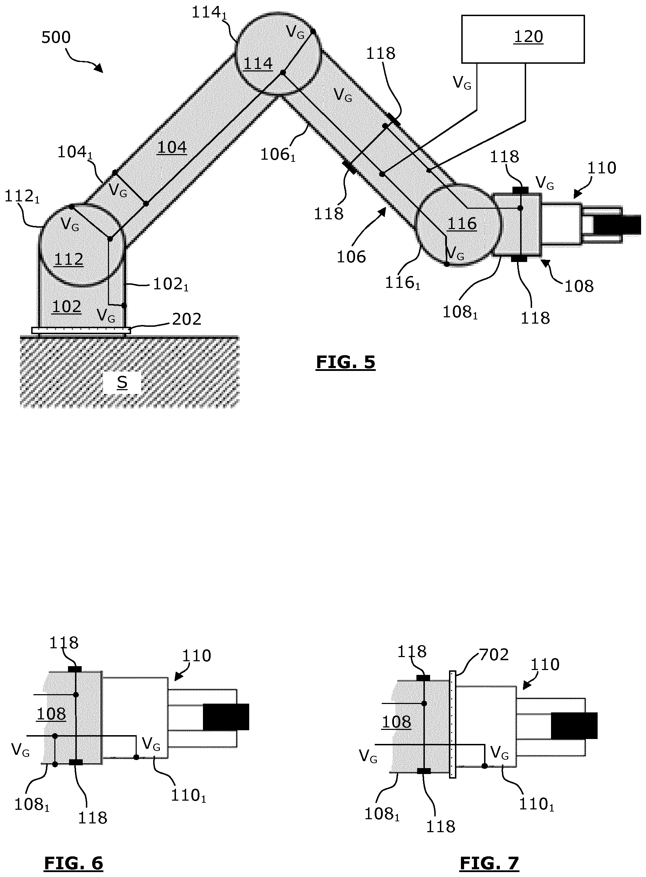

La FIGURE 5 est une représentation schématique d'un autre exemple de réalisation non limitatif d'un robot selon l'invention.

Le robot 500, représenté sur la FIGURE 5, comprend tous les éléments du robot 200 de la FIGURE 2.

En plus de ce qui est décrit dans le robot 200 de la FIGURE 2, dans le robot 500 de la FIGURE 3, les parois externes 112₁, 114₁, et 116₁ des articulations 112-116 sont aussi en matériau électriquement conducteur et polarisées au potentiel garde V_{G}.

Ainsi, à l'instar des segments non-équipés 102 et 104, les articulations 112-116 sont électriquement invisibles des électrodes de mesure 118 équipant les segments 106 et 108. Dans cette configuration, il n'y a donc pas de risque que les électrodes de mesure 118 détectent les segments 102-104, ni les articulations 112-116.

Dans les exemples qui viennent d'être décrits, seuls les segments 106 et 108 sont équipés d'électrodes de mesure 118.

Bien entendu, dans des modes de réalisation alternatifs, au moins un, en particulier chaque segment du robot, peut être équipé d'électrodes de mesure.

Alternativement ou en plus, la tête fonctionnelle du robot peut aussi être équipée d'électrodes de mesure.

Alternativement ou en plus, les articulations 112-116 peuvent aussi être équipées d'électrodes de mesure.

Nous allons maintenant décrire des exemples de tête fonctionnelle pouvant être mise en œuvre dans le robot selon l'invention, en particulier en combinaison avec l'un quelconque des robots 200, 300, 400 et 500 décrits plus haut.

La FIGURE 6 est une représentation schématique d'un exemple de tête fonctionnelle pouvant être mise en œuvre dans un robot selon l'invention, en particulier dans l'un quelconque des robots des FIGURES 2-5.

Dans l'exemple représenté sur la FIGURE 6, la paroi externe du segment 108 sur lequel est fixée la tête fonctionnelle 110 est polarisée au potentiel de garde V_{G}.

De plus, la tête fonctionnelle, ou la paroi externe 110₁ de la tête fonctionnelle 110, est également mise au potentiel de garde V_{G}.

Ainsi, la tête fonctionnelle 110 est électriquement invisible des électrodes de mesure 118 équipant les segments 106 et 108. Dans cette configuration, il n'y a donc pas de risque que les électrodes de mesure 118 détectent la tête fonctionnelle.

La FIGURE 7 est une représentation schématique d'un autre exemple de tête fonctionnelle pouvant être mise en œuvre dans un robot selon l'invention, en particulier dans l'un quelconque des robots des FIGURES 2-5.

Dans l'exemple représenté sur la FIGURE 6, la paroi externe 108₁ du segment 108 sur lequel est fixé la tête fonctionnelle 110 n'est pas polarisée au potentiel de garde V_{G}.

Dans le même temps, la tête fonctionnelle 110, ou la paroi externe 110₁ de la tête fonctionnelle 110, est polarisée au potentiel de garde V_{G}. De plus, un isolant électrique 702 est inséré entre le segment 108 et la tête fonctionnelle 110 de sorte que la tête fonctionnelle 110 est électriquement isolée du segment 108.

Dans ces conditions, la tête fonctionnelle 110 est électriquement invisible des électrodes de mesure 118 équipant les segments 106 et 108. Dans cette configuration, il n'y a donc pas de risque que les électrodes de mesure 118 détectent la tête fonctionnelle.

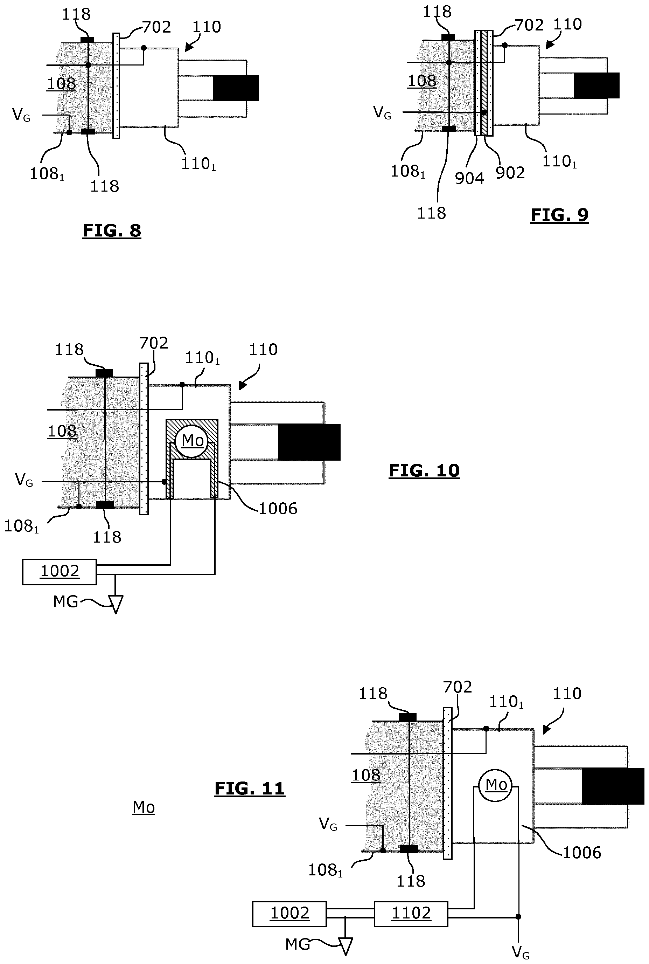

La FIGURE 8 est une représentation schématique d'un autre exemple de tête fonctionnelle pouvant être mise en œuvre dans un robot selon l'invention, en particulier dans l'un quelconque des robots des FIGURES 2-5.

Dans l'exemple représenté sur la FIGURE 8, la paroi externe 108₁ du segment 108 sur lequel est fixée la tête fonctionnelle 110 est polarisée au potentiel de garde V_{G}

La tête fonctionnelle 110 est électriquement isolée du segment 108 par l'isolant électrique 702.

De plus, la tête fonctionnelle 110 est polarisée au premier potentiel alternatif, à l'instar des électrodes de mesure 118 de sorte à former une électrode de détection capacitive. La paroi 108₁ du segment 108 étant au potentiel de garde V_{G}, l'électrode de détection formée par la tête fonctionnelle 110 est électriquement gardée par ladite paroi externe 108₁ du segment 108.

Dans ces conditions, la tête fonctionnelle 110 est utilisée comme une électrode de détection capacitive pour détecter des objets ou la personne 102, présents dans une zone de détection tout autour de la tête fonctionnelle 110.

Le module 120 permet de mesurer un signal électrique, et en particulier un courant électrique, relatif à une capacité de couplage, dite capacité électrode-objet, et notée Cₑₒ, entre la tête fonctionnelle 110 et son environnement.

La FIGURE 9 est une représentation schématique d'un autre exemple de tête fonctionnelle pouvant être mise en œuvre dans un robot selon l'invention, en particulier dans l'un quelconque des robots des FIGURES 2-5.

Dans l'exemple représenté sur la FIGURE 9, la paroi externe 108₁ du segment 108 sur lequel est fixée la tête fonctionnelle 110 n'est pas polarisée au potentiel de garde V_{G}.

La tête fonctionnelle 110 est polarisée au premier potentiel alternatif, à l'instar des électrodes de mesure 118.

De plus, un élément de garde 902, polarisé au potentiel de garde V_{G}, est disposé entre la tête fonctionnelle 110 et le segment 108. Cet élément de garde 902 permet de garder électriquement la tête fonctionnelle 110 utilisée comme électrode de détection capacitive.

L'élément de garde 902 est électriquement isolé de la tête fonctionnelle 110 par l'isolant électrique 702 et du segment 108 par un isolant électrique 904.

Dans ces conditions, la tête fonctionnelle 110 est utilisée comme une électrode de détection capacitive gardée par l'élément de garde 902 pour détecter des objets ou la personne 102, présents dans une zone de détection tout autour de la tête fonctionnelle 110.

L'élément de garde 902 peut être réalisé par tout élément électriquement conducteur, tel que par exemple une pièce de tôle. L'élément de garde 902 peut être plan, ou peut avoir une forme en manchon venant recouvrir une partie du segment 108 ou de la tête fonctionnelle 110.

Dans les exemples des FIGURES 8 et 9, la tête fonctionnelle est polarisée au premier potentiel électrique et est utilisée comme électrode de détection capacitive.

Cependant, dans certaines configurations, la tête fonctionnelle peut comprendre un organe électrique, tel qu'un moteur un capteur, etc. recevant un signal d'entrée et/ou émettant un signal de sortie. Dans cette configuration, un tel organe électrique vient perturber la détection capacitive réalisée par la tête fonctionnelle.

Nous allons maintenant décrire des exemples permettant de résoudre cette problématique.

La FIGURE 10 est une représentation schématique d'un autre exemple de tête fonctionnelle pouvant être mise en œuvre dans un robot selon l'invention, en particulier dans l'un quelconque des robots des FIGURES 2-5.

Dans l'exemple représenté sur la FIGURE 10, la tête fonctionnelle 110 comprend tous les éléments de la tête fonctionnelle de la FIGURE 8.

De plus, la tête fonctionnelle 110 comprend un organe électrique, qui dans l'exemple présent est un moteur Mo permettant de bouger les pinces de la tête fonctionnelle 110.

Le moteur électrique Mo reçoit un signal d'alimentation depuis, et éventuellement émet un signal de sortie permettant de déterminer la position des pinces vers, un contrôleur 1002 qui peut être un contrôleur du robot. Généralement ces signaux d'entrée/sortie sont référencés à un potentiel de masse électrique générale MG. Or, lorsque la tête fonctionnelle 110 est utilisée comme électrode de détection capacitive, alors le moteur Mo ainsi que les lignes électriques conduisant les signaux d'entrée/sortie, référencés au potentiel de masse générale MG, viennent perturber la détection réalisée par la tête fonctionnelle 110.

Pour éviter cette perturbation, le moteur Mo, ainsi que les connecteurs et l'électronique qui lui sont associés, sont disposés dans un volume de garde 1006 polarisé au potentiel de garde V_{G}. Ainsi, le moteur électrique Mo, et les connecteurs et l'électronique qui lui sont associés, ne sont pas visibles par la tête fonctionnelle 110 et ne perturbent pas la détection capacitive réalisée par ladite tête fonctionnelle 110.

Bien entendu, un tel volume de garde peut aussi être utilisé en combinaison avec le mode de réalisation de la FIGURE 9.

La FIGURE 11 est une représentation schématique d'un autre exemple de tête fonctionnelle pouvant être mise en œuvre dans un robot selon l'invention, en particulier dans l'un quelconque des robots des FIGURES 2-5.

Dans l'exemple représenté sur la FIGURE 11, la tête fonctionnelle 110 comprend tous les éléments de la tête fonctionnelle de la FIGURE 10 sauf le volume de garde 1006.

A la place du volume de garde, un convertisseur de potentiel 1102 est utilisé. Ce convertisseur 1102 est disposé entre le contrôleur 1002 et le moteur Mo. Ce convertisseur 1102 a pour fonction de :
- recevoir au moins un signal électrique, dit d'entrée, tel qu'un signal d'alimentation ou de commande, émis par le contrôleur 1002 et destiné au moteur Mo, et référencer ledit signal d'entrée au potentiel de garde VG ; et
- recevoir au moins un signal électrique, dit de sortie, émis par ledit moteur Mo et destiné au contrôleur 1002, et référencer ledit signal de sortie au potentiel de masse électrique MG du contrôleur 1002.

Ainsi le moteur Mo, tout comme les connecteurs et l'électronique qui lui sont associés, sont alimentés par des signaux référencés au potentiel de garde V_{G} et ne perturbent pas l'électrode de détection capacitive que constitue la tête fonctionnelle 110.

Bien entendu, un tel convertisseur de potentiel peut aussi être utilisé en combinaison avec le mode de réalisation de la FIGURE 9.

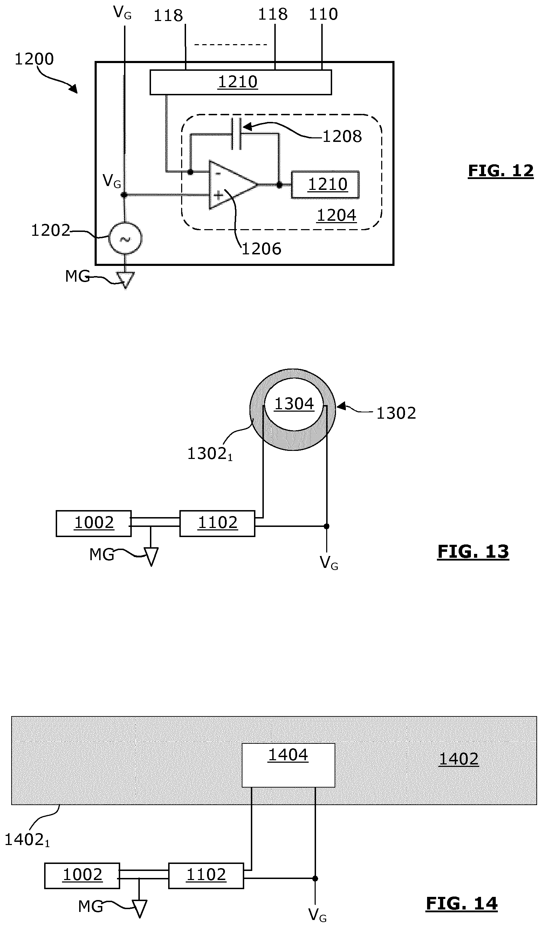

La FIGURE 12 est une représentation schématique d'une électronique de détection pouvant être mise en œuvre dans un robot selon l'invention, en particulier dans l'un quelconque des robots des FIGURES 2-5.

Le module électronique 1200, représenté sur la FIGURE 12, peut être le module électronique 120 des FIGURES 2-5.

Le module électronique 1200 comprend un oscillateur 1202 qui génère une tension alternative d'excitation, notée V_{G}, utilisée comme potentiel de garde.

Le module électronique 1200 comprend également une électronique de détection 1204 composée d'un amplificateur de courant, ou de charge, représenté par un amplificateur opérationnel 1206 et une capacité de contre-réaction 1208.

L'électronique de détection 1204 comprend en outre un conditionneur 1210 permettant d'obtenir un signal représentatif de la capacité de couplage Cₑₒ recherchée, et/ou de la présence ou de la proximité d'un objet d'un corps. Ce conditionneur 1210 peut comprendre, par exemple, un démodulateur synchrone pour démoduler le signal par rapport à une porteuse, à une fréquence de travail. Le conditionneur 1210 peut également comprendre un démodulateur asynchrone ou un détecteur d'amplitude. Ce conditionneur 1210 peut, bien entendu, être réalisé sous une forme analogique et/ou numérique (microprocesseur) et comprendre tous moyens nécessaires de filtrage, de conversion, de traitement, etc.

Le module électronique 1200 peut comprendre une électronique de détection 1204 dédiée à chacune des électrodes de détection 118 et à la tête fonctionnelle 110.

Alternativement, et tel que représenté sur la FIGURE 12, le module électronique 1200 peut comprendre une seule électronique de détection 1204 et un moyen de scrutation 1210 reliant ladite électronique de détection 1204, à tour de rôle, à chaque électrode de mesure 118 et à la tête fonctionnelle 110, de sorte à interroger individuellement chacune desdites électrodes de mesure et la tête fonctionnelle 110.

Bien entendu, le module électronique 1200 peut comprendre d'autres composants que ceux décrits.

De plus, le module électronique 1200 peut être au moins en partie intégré dans une électronique du robot, ou dans le corps du robot, ou dans la tête fonctionnelle, ou encore dans une interface existante ou additionnelle, positionnée entre la tête fonctionnelle et le corps du robot.

Le module électronique 1200 peut également se présenter sous la forme d'un module ou d'un boîtier externe au corps du robot. Dans ce cas, tout ou partie des connexions électriques décrites peuvent être localisées au niveau du module électronique 1200 relié aux autres éléments par des câbles.

Dans les exemples qui viennent d'être décrits, ce sont les coques/parois externes d'une partie ou de la totalité des sous-parties du robot, à savoir les coques/parois externes des segments 102-108 et/ou de la tête fonctionnelle 110 et/ou des articulations 112-116, qui sont mises au potentiel de garde V_{G}. Cela nécessite que les coques/parois externes de ces sous-parties soient électriquement conductrices, au moins en partie.

Cependant, il peut arriver qu'une sous partie du robot, telle que par exemple une articulation, un segment ou la tête fonctionnelle, comporte une coque/paroi externe qui n'est pas électriquement conductrice.

Lorsqu'une telle sous-partie est appareillée, c'est-à-dire qu'elle comporte au moins un organe électrique, alors ce dernier peut perturber la détection capacitive s'il est référencé à un potentiel électrique différent du premier potentiel ou du potentiel de garde.

Pour éviter une telle perturbation, l'organe électrique d'une sous partie peut être mis dans un volume de garde, à l'instar de ce qui a été décrit en FIGURE 10 pour la tête fonctionnelle.

Alternativement, ou en plus, un convertisseur de potentiel peut être utilisé, à l'instar de ce qui a été décrit en FIGURE 11 pour la tête fonctionnelle, pour convertir la référence électrique des signaux d'entrée/sortie vers/depuis l'organe de la sous-partie.

La FIGURE 13 est une représentation schématique d'une articulation qui peut être utilisée dans un robot selon l'invention.

En particulier, l'articulation 1302 représentée sur la FIGURE 13, peut être l'une quelconque des articulations 112-116 du robot 100 et peut être mise en œuvre dans l'un quelconque des robots des FIGURES 1-11.

Dans l'exemple représenté, la coque/paroi externe 1302₁ de l'articulation 1302 n'est pas conductrice, et ne peut donc pas être mise au potentiel de garde V_{G}.

Dans le même temps, l'articulation 1302 comprend un organe électrique, qui dans l'exemple présent un moteur 1304. Pour éviter que le moteur 1304 disposé dans l'articulation 1302 perturbe la détection capacitive dans le robot, un convertisseur de potentiel, tel que par exemple le convertisseur 1102, est utilisé. La fonction de ce convertisseur 1102 est de :
- recevoir au moins un signal électrique, dit d'entrée, tel qu'un signal d'alimentation ou de commande, émis par exemple par le contrôleur 1002 et destiné au moteur 1304, et référencer ledit signal d'entrée au potentiel de garde V_{G} ; et
- recevoir au moins un signal électrique, dit de sortie, émis par ledit moteur 1304 et destiné au contrôleur 1002, et référencer ledit signal de sortie au potentiel de masse électrique MG du contrôleur 1002.

Ainsi le moteur 1304, se trouvant dans l'articulation tout comme les connecteurs et l'électronique qui lui sont associés, sont alimentés par des signaux référencés au potentiel de garde V_{G} et ne perturbent la détection capacitive.

Alternativement, le convertisseur peut être remplacé par un volume de garde, tel que décrit en référence à la FIGURE 10.

La FIGURE 14 est une représentation schématique d'un segment qui peut être utilisé dans un robot selon l'invention.

En particulier, le segment 1402 représenté sur la FIGURE 14, peut être l'un quelconque des segments 102-108 du robot 100.

Dans l'exemple représenté, la coque externe 1402₁ n'est pas conductrice, et ne peut donc pas être mise au potentiel de garde V_{G}.

Dans le même temps, le segment 1402 comprend un organe électrique, qui dans l'exemple présent un module électrique 1404. Pour éviter que le module électrique 1404 perturbe la détection capacitive dans le robot, un convertisseur de potentiel, tel que par exemple le convertisseur 1102, est utilisé. Ce convertisseur a pour fonction de :
- recevoir au moins un signal électrique, dit d'entrée, tel qu'un signal d'alimentation ou de commande, émis par exemple par le contrôleur 1002 et destiné au module 1404, et référencer ledit signal d'entrée au potentiel de garde V_{G} ; et
- recevoir au moins un signal électrique, dit de sortie, émis par le module 1404 et destiné au contrôleur 1002, et référencer ledit signal de sortie au potentiel de masse électrique MG du contrôleur 1002.

Ainsi le module, se trouvant dans l'articulation tout comme les connecteurs et l'électronique qui lui sont associés, sont alimentés par des signaux référencés au potentiel de garde V_{G} et ne perturbent la détection capacitive.

Alternativement, le convertisseur peut être remplacé par un volume de garde, tel que décrit en référence à la FIGURE 10.

Le convertisseur utilisé peut être commun à tous les organes équipant le robot. Alternativement, un convertisseur peut être dédié à un organe, ou un groupe d'organes.

Bien entendu, un organe électrique d'une sous-partie, telle qu'un segment ou une articulation, peut être mis dans un volume de garde, ou référencé à un potentiel de garde par un convertisseur de potentiel tel que décrit en relation avec la FIGURE 13 ou la FIGURE 14, même si la coque ou la paroi externe de la sous-partie est partiellement ou totalement électriquement conductrice, et en particulier même si elle est polarisée au potentiel de garde VG.

Dans ce cas, la totalité de la sous-partie peut être référencée au potentiel de garde V_{G}.

Une sous-partie telle qu'une articulation ou un segment peut bien entendu comprendre des électrodes de mesure 118 disposées sur une partie de la coque/paroi externe non conductrice.

Selon qu'elle comprend ou non des éléments internes conducteurs ou des organes électriques polarisés ou référencé au potentiel de garde V_{G}, il peut être préférable d'insérer un plan de garde vis-à-vis de la face des électrodes dirigée vers l'intérieur de la sous-partie, pour s'assurer que les électrodes de mesure ne sont sensibles qu'à la présence d'objets à proximité de leur face externe. Ce plan de garde peut être placé par exemple entre les électrodes de mesure et la paroi externe, ou sur la face intérieure de la paroi de la sous-partie.

Bien sûr, l'invention n'est pas limitée aux exemples qui viennent d'être décrits et de nombreux aménagements peuvent être apportés à ces exemples sans sortir du cadre de l'invention tel que défini par les revendications.

## Revendications

1. Robot (200;300;400;500) comprenant au moins une sous-partie (102-116, 1302,1042), ledit robot comprenant en outre :
- pour au moins une sous-partie (106,108), dite équipée, au moins une électrode de détection capacitive (118), dite de mesure, disposée sur, ou dans, une paroi externe (106₁, 108₁) de ladite sous-partie (106,108),
- au moins un moyen de polarisation électrique pour polariser ladite au moins une électrode de mesure (118) à un premier potentiel électrique alternatif, différent d'un potentiel de masse générale (MG), à une fréquence, dite de travail, et
- au moins une électronique (1204), dite de détection, pour mesurer un signal relatif à une capacité de couplage, dite capacité électrode-objet, entre l'au moins une électrode de mesure (118) et un objet environnant (OP) ;
**caractérisé en ce que** ledit au moins un moyen de polarisation est en outre agencé pour polariser au moins une partie électriquement conductrice de la paroi externe (102₁-116₁) d'au moins une sous-partie (102-116), à un potentiel électrique alternatif (V_{G}), dit de garde, identique ou sensiblement identique audit premier potentiel à ladite fréquence de travail.

2. Robot (200;300;400;500) selon la revendication précédente, **caractérisé en ce qu'**au moins une sous-partie dudit robot est :
- un segment dudit robot (102-108,1402), ou
- une interface mécanique (112-116,1302), articulée ou non, entre au moins deux segments (102-108) dudit robot, ou
- une tête fonctionnelle (110), articulée ou non, formant un outil, ou une tête d'outil.

3. Robot (200;300;400;500) selon l'une quelconque des revendications précédentes, **caractérisé en ce qu'**il comprend au moins une sous-partie (102,104), dite non-équipée, ne comportant pas d'électrode de mesure, et dont au moins une partie électriquement conductrice de la paroi externe (102₁,104₁) est polarisée au potentiel de garde (V_{G}).

4. Robot (300;400) selon l'une quelconque des revendications précédentes, **caractérisé en ce qu'**il comprend au moins une sous-partie équipée (106,108) dont au moins une partie de la paroi externe (106₁,108₁) est polarisée au potentiel de garde.

5. Robot (200;500) selon l'une quelconque des revendications précédentes, **caractérisé en ce qu'**il comprend au moins une sous-partie équipée (106,108) dont la paroi externe (106₁,108₁) n'est pas polarisée au potentiel de garde (V_{G}).

6. Robot (200;500) selon l'une quelconque des revendications précédentes, **caractérisé en ce qu'**il comprend au moins une sous-partie (110, 1302,1402), dite appareillée, comprenant au moins un organe électrique (Mo, 1304, 1404) disposé dans ladite sous-partie (1302,1402).

7. Robot (200,300,400,500) selon la revendication 6, **caractérisé en ce qu'**au moins une sous-partie appareillée (1302,1402) comporte, pour au moins un organe (1304,1404), un volume ou des parois, dit(es) de garde, disposé(es) autour dudit au moins un organe et polarisé(es) au potentiel de garde (V_{G}).

8. Robot selon la revendication 6, **caractérisé en ce qu'**au moins une sous-partie appareillée comporte au moins un organe électriquement polarisé, ou référencé, au potentiel de garde (V_{G}).

9. Robot (200;300;400;500) selon l'une quelconque des revendications précédentes, **caractérisé en ce qu'**il comprend une tête fonctionnelle formée par une sous-partie, ladite tête fonctionnelle (110) formant une électrode de détection capacitive, l'au moins un moyen de polarisation étant en outre agencé pour polariser ladite tête fonctionnelle (110) au premier potentiel électrique alternatif, et l'au moins une électronique de détection étant agencée pour mesurer un signal relatif à une capacité de couplage entre ladite tête fonctionnelle (110) et un objet environnant (OP).

10. Robot (200;300;400;500) selon la revendication précédente, **caractérisé en ce qu'**il comprend au moins un organe électrique (Mo) agencé dans la tête fonctionnelle (110), et pour ledit au moins un organe, un volume (1006), ou des parois, dit(es) de garde, disposé(es) autour dudit au moins un organe et polarisé(es) au potentiel de garde (V_{G}).

11. Robot selon la revendication 10, **caractérisé en ce qu'**il comprend au moins un organe électrique (Mo) agencé dans la tête fonctionnelle, et électriquement polarisé, ou référencé, au potentiel de garde (V_{G}).

12. Robot (200;300;400;500) selon l'une quelconque des revendications 8 ou 11, **caractérisé en ce qu'**il comprend , pour au moins un organe électrique (Mo) électriquement polarisé, ou référencé, au potentiel de garde (V_{G}), au moins un convertisseur électrique (1102) agencé pour :
- recevoir au moins un signal électrique, dit d'entrée, tel qu'un signal d'alimentation ou de commande, destiné audit au moins un organe électrique (Mo), et référencer ledit signal d'entrée au potentiel de garde (V_{G}) ; et/ou
- recevoir au moins un signal électrique, dit de sortie, émis par ledit au moins un organe électrique (Mo), et référencer ledit signal de sortie au potentiel de masse électrique (MG) d'un contrôleur (1002) auquel il est destiné.

13. Robot (200;300;400;500) selon la revendication 12, **caractérisé en ce que** le convertisseur électrique (1102) comprend :
- au moins une alimentation à isolation galvanique, tel qu'un convertisseur DC/DC, en particulier pour générer un signal d'entrée d'alimentation pour ledit au moins un organe électrique (Mo) ;
- au moins une interface électrique sans contact galvanique, de type capacitive ou par opto-coupleur, pour au moins un signal d'entrée de commande, ou au moins un signal de sortie ;
- une ou plusieurs inductances à impédance élevée pour recevoir et transmettre au moins un signal d'entrée ou au moins un signal de sortie ; et/ou
- au moins un convertisseur à transfert de charges, ou à pompe de charge, à base de capacités commutées.

14. Robot (200;300;400;500) selon l'une quelconque des revendications 1 à 4, **caractérisé en ce que** la paroi externe (102₁-108₁) de toutes les sous-parties (102-108) dudit robot (200;300;400;500) est polarisée au potentiel de garde, ledit robot (200;300;400;500) comprenant une interface de fixation dudit robot à un support externe, et un isolant électrique (202) au niveau de ladite interface de fixation.

15. Robot (200;300;400;500) selon l'une quelconque des revendications précédentes, **caractérisé en ce que**, pour au moins une sous-partie (102-108), la paroi externe (102₁-108₁) dudit segment (102-108) est réalisée, au moins partiellement :
- en un matériau électriquement conducteur, ou
- en un matériau électriquement non-conducteur comportant une couche électriquement conductrice.

16. Robot selon l'une quelconque des revendications précédentes, **caractérisé en ce que** tous les organes électriques agencés dans ledit robot sont électriquement référencés au potentiel de garde (V_{G}).

17. Robot (200;300;400;500) selon l'une quelconque des revendications précédentes, **caractérisé en ce qu'**il se présente sous l'une des formes suivantes : bras robotisé, robot mobile, androïde.

## Patentansprüche

1. Roboter (200; 300; 400; 500), umfassend mindestens einen Unterteil (102-116, 1302, 1042), wobei der Roboter außerdem umfasst:
- für mindestens einen sogenannten ausgestatteten Unterteil (106, 108), mindestens eine kapazitive Erfassungselektrode (118), eine sogenannte Messelektrode, welche an oder in einer Außenwand (106₁, 108₁) des Unterteils (106, 108) angeordnet ist,
- mindestens ein elektrisches Polarisationsmittel zur Polarisation der mindestens einen Messelektrode (118) auf ein erstes, von einem allgemeinen Massepotential (MG) abweichendes, elektrisches Wechselpotential bei einer sogenannten Arbeitsfrequenz, und
- mindestens eine sogenannte Erfassungselektronik (1204) zur Messung eines Signals in Bezug auf eine Kopplungskapazität, die sogenannte Elektrode-Objekt-Kapazität, zwischen der mindestens einen Messelektrode (118) und einem umgebenden Objekt (OP);
**dadurch gekennzeichnet, dass** das mindestens eine Polarisationsmittel außerdem dafür angeordnet ist, mindestens einen elektrisch leitenden Teil der Außenwand (102₁-116₁) mindestens eines Unterteils (102-116) auf ein elektrisches sogenanntes Schutz-Wechselpotential (V_{G}) zu polarisieren, welches dem ersten Potential bei der Arbeitsfrequenz gleich oder im Wesentlichen gleich ist.

2. Roboter (200; 300; 400; 500) nach dem vorhergehenden Anspruch, **dadurch gekennzeichnet, dass** mindestens ein Unterteil des Roboters:
- ein Segment des Roboters (102-108,1402), oder
- eine mechanische, gelenkig oder nicht gelenkig ausgebildete Schnittstelle (112-116, 1302) zwischen mindestens zwei Segmenten (102-108) des Roboters, oder
- ein gelenkig oder nicht gelenkig ausgebildeter Funktionskopf (110), welcher ein Werkzeug oder einen Werkzeugkopf bildet,
ist.

3. Roboter (200; 300; 400; 500) nach einem der vorhergehenden Ansprüche, **dadurch gekennzeichnet, dass** er mindestens einen sogenannten nicht ausgestatteten Unterteil (102, 104) umfasst, welcher keine Messelektrode enthält und wovon mindestens ein elektrisch leitender Teil der Außenwandung (102₁, 104₁) auf das Schutzpotential (V_{G}) polarisiert ist.

4. Roboter (300; 400) nach einem der vorhergehenden Ansprüche, **dadurch gekennzeichnet, dass** er mindestens einen ausgestatteten Unterteil (106, 108) umfasst, wovon mindestens ein Teil der Außenwandung (106₁, 108₁) auf das Schutzpotential polarisiert ist.

5. Roboter (200; 500) nach einem der vorhergehenden Ansprüche, **dadurch gekennzeichnet, dass** er mindestens einen ausgestatteten Unterteil (106, 108) umfasst, dessen Außenwandung (106₁, 108₁) nicht mit dem Schutzpotential (V_{G}) polarisiert ist.

6. Roboter (200; 500) nach einem der vorhergehenden Ansprüche, **dadurch gekennzeichnet, dass** er mindestens einen sogenannten ausgerüsteten Unterteil (110, 1302, 1402) umfasst, welcher mindestens eine elektrische Einrichtung (Mo, 1304, 1404) umfasst, die in dem Unterteil (1302, 1402) gelagert ist.

7. Roboter (200, 300, 400, 500) nach Anspruch 6, **dadurch gekennzeichnet, dass** mindestens ein ausgerüsteter Unterteil (1302, 1402), für zumindest eine elektrische Einrichtung (1304, 1404), ein sogenanntes Schutzvolumen oder sogenanntes Schutzwände enthält, welche(s) um die mindestens eine Einrichtung herum gelagert und auf das Schutzpotential (V_{G}) polarisiert ist(sind).

8. Roboter nach Anspruch 6, **dadurch gekennzeichnet, dass** mindestens ein ausgerüsteter Unterteil mindestens eine auf das Schutzpotential (V_{G}) elektrisch polarisierte oder darauf bezogene Einrichtung enthält.

9. Roboter (200; 300; 400; 500) nach einem der vorhergehenden Ansprüche, **dadurch gekennzeichnet, dass** er einen Funktionskopf umfasst, der durch einen Unterteil gebildet ist, wobei der Funktionskopf (110) eine kapazitive Erfassungselektrode bildet, wobei das mindestens eine Polarisationsmittel außerdem dazu angeordnet ist, den Funktionskopf (110) auf das erste elektrische Wechselpotential zu polarisieren und wobei die mindestens eine Erfassungselektronik dazu angeordnet ist, ein Signal in Bezug auf eine Kopplungskapazität zwischen dem Funktionskopf (110) und einem umgebenden Objekt (OP) zu messen.

10. Roboter (200; 300; 400; 500) nach dem vorhergehenden Anspruch, **dadurch gekennzeichnet, dass** er mindestens eine elektrische, im Funktionskopf (110) angeordnete Einrichtung (Mo) umfasst und, für die mindestens eine Einrichtung, ein sogenanntes Schutzvolumen (1006) oder sogenannte Schutzwände, welche(s) um die mindestens eine Einrichtung herum gelagert und auf das Schutzpotential (V_{G}) polarisiert ist(sind).

11. Roboter nach Anspruch 10, **dadurch gekennzeichnet, dass** er mindestens eine elektrische Einrichtung (Mo) umfasst, die im Funktionskopf angeordnet und auf das Schutzpotential (V_{G}) elektrisch polarisiert oder darauf bezogen ist.

12. Roboter (200; 300; 400; 500) nach einem der Ansprüche 8 oder 11, **dadurch gekennzeichnet, dass** er für mindestens eine elektrische, auf das Schutzpotential (V_{G}) elektrisch polarisierte oder darauf bezogene elektrische Einrichtung (Mo) mindestens einen elektrischen Wandler (1102) umfasst, welcher dazu angeordnet ist:
- mindestens ein elektrisches, sogenanntes Eingangssignal wie ein Versorgungs- oder Steuersignal zu empfangen, das für die wenigstens eine elektrische Einrichtung (Mo) bestimmt ist, und das Eingangssignal auf das Schutzpotential (V_{G}) zu beziehen; und/oder
- mindestens ein elektrisches, sogenanntes Ausgangssignal, das durch die mindestens eine elektrische Einrichtung (Mo) gesendet wird, zu empfangen, und das Ausgangssignal auf das elektrische Massepotential (MG) einer Steuervorrichtung (1002), für die es bestimmt, zu beziehen.

13. Roboter (200; 300; 400; 500) nach Anspruch 12, **dadurch gekennzeichnet, dass** der elektrische Wandler (1102) umfasst:
- mindestens eine Versorgung mit galvanischer Isolierung wie einen DC/DC Wandler, insbesondere zur Erzeugung eines Versorgungseingangssignals für die mindestens eine elektrische Einrichtung (Mo);
- mindestens eine elektrische Schnittstelle ohne galvanischen Kontakt, kapazitiv oder mit optischem Koppler, für mindestens ein Steuereingangssignal oder mindestens ein Ausgangssignal;
- eine oder mehrere Induktivitäten mit hoher Impedanz zum Empfangen und Übertragen mindestens eines Eingangssignals oder mindestens eines Ausgangssignals; und/oder
- mindestens einen Wandler mit Ladungsübertragung oder mit Ladepumpe auf Basis von geschalteten Kondensatoren.

14. Roboter (200; 300; 400; 500) nach einem der Ansprüche 1 bis 4, **dadurch gekennzeichnet, dass** die Außenwand (102₁-108₁) aller Unterteile (102-108) des Roboters (200; 300; 400; 500) auf das Schutzpotential polarisiert ist, wobei der Roboter (200, 300; 400; 500) eine Schnittstelle zur Befestigung des Roboters an einem externen Träger sowie einen elektrischen Isolator (202) an der Befestigungsschnittstelle umfasst.

15. Roboter (200; 300; 400; 500) nach einem der vorhergehenden Ansprüche, **dadurch gekennzeichnet, dass** für mindestens einen Unterteil (102-108) die Außenwandlung (102₁-108₁) des Segments (102-108) mindestens teilweise wie folgt ausgeführt ist:
- aus einem elektrisch leitenden Werkstoff, oder
- aus einem elektrisch nicht leitenden Werkstoff, der eine elektrisch leitende Schicht enthält.

16. Roboter nach einem der vorhergehenden Ansprüche, **dadurch gekennzeichnet, dass** alle elektrischen, in dem Roboter angeordneten Einrichtungen auf das Schutzpotential (V_{G}) elektrisch bezogen sind.

17. Roboter (200; 300; 400; 500) nach einem der vorhergehenden Ansprüche, **dadurch gekennzeichnet, dass** er eine der folgenden Formen aufweist: Roboterarm, beweglicher Roboter, Android.

## Claims

1. A robot (200;300;400;500) comprising at least one sub-part (102-116,1302,1042), said robot also comprising:
- for at least one sub-part (106,108), called equipped, at least one capacitive detection electrode (118), called measurement electrode, placed on, or in, an outer wall (106₁,108₁) of said sub-part (106,108),
- at least one means of electrical polarization for polarizing said at least one measurement electrode (118) at a first alternating electrical potential, different from a general ground potential (MG), at a frequency, called working frequency, and
- at least one electronic unit (1204), called detection unit, for measuring a signal relative to a coupling capacitance, called electrode-object capacitance, between the at least one measurement electrode (118) and a nearby object (OP);
**characterized in that** said at least one polarization means is also arranged in order to polarize at least one electrically conductive part of the outer wall (102₁-116₁) of at least one sub-part (102-116), at an alternating electrical potential (V_{G}), called guard potential, identical or substantially identical to said first potential, at said working frequency.

2. The robot (200;300;400;500) according to the preceding claim, **characterized in that** at least one sub-part of said robot is:
- a segment of said robot (102-108,1402), or
- a mechanical interface (112-116,1302), articulated or not, between at least two segments (102-108) of said robot, or
- a functional head (110), articulated or not, forming a tool, or a tool head.

3. The robot (200;300;400;500) according to any one of the preceding claims, **characterized in that** it comprises at least one sub-part (102,104), called non-equipped, not comprising a measurement electrode, at least one electrically conductive part of the outer wall (102₁,104₁) of which is polarized at the guard potential (V_{G}).

4. The robot (300;400) according to any one of the preceding claims, **characterized in that** it comprises at least one equipped sub-part (106,108), at least one part of the outer wall (106₁,108₁) of which is polarized at the guard potential.

5. The robot (200;500) according to any one of the preceding claims, **characterized in that** it comprises at least one equipped sub-part (106,108), the outer wall (106₁,108₁) of which is not polarized at the guard potential (V_{G}).

6. The robot (200;500) according to any one of the preceding claims, **characterized in that** it comprises at least one sub-part (110, 1302,1402), called fitted-out sub-part, comprising at least one electrical item (Mo,1304,1404) placed in said sub-part (1302,1402).

7. The robot (200,300,400,500) according to claim 6, **characterized in that** at least one fitted-out sub-part (1302, 1402) comprises, for at least one item (1304,1404), a volume or walls, called guard volume or walls, placed around said at least one item and polarized at the guard potential (V_{G}).

8. The robot according to claim 6, **characterized in that** at least one fitted-out sub-part comprises at least one item electrically polarized at, or referenced to, the guard potential (V_{G}).

9. The robot (200;300;400;500) according to any one of the preceding claims, **characterized in that** it comprises a functional head formed by a sub-part, said functional head (110) forming a capacitive detection electrode, the at least one polarization means also being arranged to polarize said functional head (110) at the first alternating electrical potential, and the at least one electronic detection unit being arranged in order to measure a signal relating to a coupling capacitance between said functional head (110) and a nearby object (OP).

10. The robot (200,300,400,500) according to the preceding claim, **characterized in that** it comprises at least one electrical item (Mo) arranged in the functional head (110), and for said at least one item, a volume (1006), or walls, called guard volume or walls, placed around said at least one item and polarized at the guard potential (V_{G}).

11. The robot according to claim 10, **characterized in that** it comprises at least one electrical item (Mo) arranged in the functional head, and electrically polarized at, or referenced to, the guard potential (V_{G}).

12. The robot (200;300;400;500) according to any one of claims 8 or 11, **characterized in that** it comprises, for at least one electrical item (Mo) that is electrically polarized at, or referenced to, the guard potential (V_{G}), at least one electrical converter (1102) arranged to:
- receive at least one electrical signal, called input signal, such as a supply or control signal, intended for said at least one electrical element (Mo), and reference said input signal to the guard potential (V_{G}); and/or
- receive at least one electrical signal, called output signal, transmitted by said at least one electrical item (Mo), and reference said output signal to the electrical ground potential (MG) of a controller (1002) for which it is intended.

13. The robot (200;300;400;500) according to claim 12, **characterized in that** the electrical converter (1102) comprises:
- at least one supply with galvanic isolation, such as a DC/DC converter, in particular for generating a supply input signal for said at least one electrical item (Mo);
- at least one electrical interface without galvanic contact, of the capacitive type or by opto-coupler, for at least one control input signal, or at least one output signal;
- one or more high-impedance inductors for receiving and transmitting at least one input signal or at least one output signal; and/or
- at least one capacitor-commutated charge-transfer or charge-pump converter.

14. The robot (200;300;400;500) according to any one of claims 1 to 4, **characterized in that** the outer wall (102₁-108₁) of all of the sub-parts (102-108) of said robot (200,300,400,500) is polarized at the guard potential, said robot (200;300;400;500) comprising an interface for fastening said robot to an external support, and an electrical insulator (202) at said fastening interface.

15. The robot (200;300;400;500) according to any one of the preceding claims, **characterized in that**, for at least one sub-part (102-108), the outer wall (102₁-108₁) of said segment (102-108) is produced, at least partially:
- from an electrically conductive material, or
- from an electrically non-conductive material comprising an electrically conductive layer.

16. The robot according to any one of the preceding claims, **characterized in that** all the electrical items arranged in said robot are electrically referenced to the guard potential (V_{G}).

17. The robot (200;300;400;500) according to any one of the preceding claims, **characterized in that** it is presented in one of the following forms: robotized arm, mobile robot, android.
